# EUROPÄISCHE PATENTANMELDUNG

(11) **EP 1 248 349 A2**
(43) Veröffentlichungstag der Anmeldung: **09.10.2002**
(21) Anmeldenummer: 02006979.5
(22) Anmeldetag: 27.03.2002
(51) Int. Cl.: H02K 1/32, H02K 5/20, H02K 9/00, H02K 9/02, H02K 9/06, H02K 9/14, H02K 9/18

(54) **Elektrischer Asynchronmotor**

(30) Priorität: 06.04.2001 DE 10117398
(71) Anmelder: Miscel Oy Ltd., 33230 Tampere (FI)
(72) Erfinder: Soitu, Viktor, 53810 Lappeenranta (FI); Säiläkivi, Jaakko, 33500 Tampere (FI); Laakkonen, Pekka, 00660 Helsinki (FI)

(57) **Zusammenfassung**

Ein elektrischer Asynchronmotor zum Antrieb einer Welle, eines Walzenmantels oder eines ähnlichen anzutreibenden Maschinenelements umfast einen ringförmigen Rotor (5) und einen ringförmigen Stator (4), von denen jeder an jedem seiner beiden Enden eine Stirnfläche aufweist. Der Rotor (5) ist mittels Speichen (7) mit einer Motorwelle (2) verbunden. Ein Motorkühlsystem umfasst einen internen Kühlluftkreislauf, wobei ein Luftstrom zwischen dem Rotor (5) und der Motorwelle (2) strömt sowie durch einen ringförmigen Wärmetauscher (10F), um Wärme vom Rotor (5) und/oder vom Stator (4) an eine Kühlflüssigkeit zu übertragen. Der ringförmige Wärmetauscher (10F) ist innerhalb des Motorgehäuses (3d-f) im Bereich einer Stirnfläche des Rotors (5) angeordnet. Der Kühlluftstrom passiert auch Gebläseschaufeln (18.1) und mindestens eine Ringreihe von Luftzirkulationskanälen (12, 14), die sich im Ringkörper des Stators (4) und/oder des Rotors (5) befinden, wobei Luftströme von der einen zur anderen Stirnfläche des Stators und/oder des Rotors fließen, so dass der besagte Kühlluftkreislauf eine interne toroidale Luftströmung umfaßt.

## Beschreibung

### Gebiet der Erfindung

Die vorliegende Erfindung betrifft einen elektrischen Asynchronmotor, der zum Antrieb einer Welle, eines Walzenmantels oder eines ähnlichen anzutreibenden Maschinenelements geeignet ist. Die bekannten Elemente eines solchen elektrischen Motors sind im Oberbegriff des Anspruches 1 angegeben. Die vorliegende Erfindung betrifft außerdem ein Verfahren zum Kühlen eines elektrischen Motors, entsprechend dem Oberbegriff des Anspruches 33.

### Beschreibung des Standes der Technik

Die folgenden Dokumente zum Stand der Technik sollen berücksichtigt werden:
D1: DE 299 08 833.7
D2: DE 100 35 578.1 (nach-veröffentlicht am 2002-01-31)
D3: WO 97/45941
D4: DE 199 05 538 A1

D1 beschreibt einen elektrischen Motor für den Antrieb einer Walze oder eines Zylinders einer Papierherstellungs- oder Papierveredelungsmaschine. Diese bekannte Vorrichtung kann als ein Direktantrieb oder als ein indirekter Antrieb ausgebildet sein. "Direktantrieb" besagt, dass der Rotor des Motors direkt mit einem Zapfen einer Walze oder eines Zylinders verbunden ist, ohne Benützung irgendeiner dazwischen befindlichen Kraftübertragung, z.B. eines Untersetzungsgetriebes. Der Elektromotor ist als sogenannter "Aufsteckmotor" ausgebildet und ist zwischen dem Körper und dem Lager der Walze oder des Zylinders angeordnet. In dem Gehäuse des Motors sind Öffnungen vorgesehen zum Zuführen von Kühlluft an die inneren Elemente des Motors. Ein zusätzliches Gebläse kann aktiviert werden, wenn die Antriebsgeschwindigkeit gering ist.

D2 beschreibt eine Weiterentwicklung von D1: Ein elektrischer Motor ist für den direkten Antrieb einer Walze oder eines Zylinders einer Papiermaschine gestaltet. Das Kühlsystem dieses Motors benützt ein Schmieröl, das primär zum Schmieren von Lagern der Walze
oder des Zylinders vorgesehen ist. Das Kühlsystem umfasst eine Kühlleitung, die schraubenlinienförmig um den Stator des Motors geführt ist, genauer gesagt zwischen dem Stator und dem Gehäuse.

D3 beschreibt einen sogenannten Massiv-Rotor für eine elektrische Maschine. Der Massiv-Rotor wird als vorteilhaft beschrieben gegenüber dem herkömmlichen laminierten Rotor; jedoch treten Überhitzungsprobleme auf, besonders wenn kleine Drehzahlen gewünscht sind, nämlich solche unterhalb 20.000 1/min, die für einen Direktantrieb erforderlich sind. D3 versucht die besagten Überhitzungsprobleme (und andere Probleme) zu lösen, und zwar mit Hilfe einiger unterschiedlicher Ausführungen des Massiv-Rotors mit guter elektrischer Leitfähigkeit. Es ist jedoch anzunehmen, dass eine elektrische Maschine, die irgendeinen der in D3 beschriebenen Rotoren benützt, noch ein Kühlsystem benötigt, insbesondere wenn sie für einen Direktantrieb benützt wird, z.B. für Walzen oder Zylinder von Papiermaschinen. In D3 ist irgendeine Kühleinrichtung überhaupt nicht erwähnt.

D4 beschreibt einen Elektromotor für den Antrieb eines Fahrzeuges. Der Elektromotor umfasst einen ringförmigen Rotor und einen ringförmigen Stator, die beide in einem Gehäuse angeordnet sind. Ein Kühlsystem umfasst einen Wärmetauscher zur Wärmeübertragung vom Rotor und vom Stator über einen internen Kühlluftkreislauf an eine Kühlflüssigkeit. Der Wärmetauscher ist außerhalb eines Teiles derjenigen Gehäusesektion angeordnet, welche den Stator umhüllt. Der interne Kühlluftkreislauf umfasst einen Luftstrom, der durch den Wärmetauscher strömt und durch einen Bereich zwischen dem Rotor und einer massiven Motorwelle. Die letztere ist mit dem Rotor verbunden mittels Verbindungselementen, z.B. radialen Schaufeln. Es mag zwar sein, dass die Leistung dieses bekannten Kühlsystems ausreicht, wenn der Motor zum Antrieb eines Fahrzeuges benutzt wird. Würde jedoch der Motor dazu benötigt werden, um irgend ein Bauteil einer Papiermaschine anzutreiben, insbesondere in einer heißen Umgebung und in Fall eines Direktantriebes, dann wäre die Leistung des bekannten Kühlsystems unzureichend.

Im übrigen ist bei dem aus D4 bekannten Elektromotor das Verhältnis zwischen dem Außendurchmesser des Rotors und dem Außendurchmesser der Gehäusesektion (welche unmittelbar den Stator umhüllt), ungefähr 0,5/1; dies ist ein relativ niedriger Wert; daraus resultiert ein niedriges Drehmoment, insbesondere bei kleiner Drehzahl. Dies ist ein weiterer Grund, warum dieser bekannte Elektromotor für den Direktantrieb einer Maschinenkomponente (z.B. Walze oder Zylinder) einer Papiermaschine nicht einsetzbar ist.

### Kern der Erfindung

Das Ziel der vorliegenden Erfindung besteht darin, einen elektrischen Asynchronmotor vorzusehen, der möglichst viele der folgenden Forderungen erfüllt, oder in anderen Worten: Das Ziel ist möglichst viele der folgenden Probleme zu lösen:
1. Der Motor soll geeignet sein, um eine Welle, einen Walzenmantel oder ein ähnliches Maschinenelement direkt anzutreiben. Jedoch kann der erfindungsgemäße Motor auch für einen indirekten Antrieb benutzt werden.
2. Der Motor soll insbesondere geeignet sein, um eine Walze oder einen Zylinder einer Maschine zur Herstellung oder Veredelung von Papier oder Karton anzutreiben; die Antriebsvorrichtung soll vorzugsweise als ein Direktantrieb ausgebildet sein, wobei der Motor als "Aufsteckmotor" ausgebildet ist.
3. Genauer gesagt: Der Motor soll geeignet sein, um irgendeine Walze oder einen Zylinder direkt anzutreiben, und zwar auch bei geringer Geschwindigkeit, beispielsweise bei der sogenannten "Kriechgeschwindigkeit", die häufig beim Anfahren einer Papiermaschine benötigt wird.
4. Verglichen mit bekannten Motoren soll eine höhere Motorieistung/höheres Drehmoment erreicht werden, besonders auch im Anfahrbereich.
5. Irgendwelche Überhitzungsprobleme sollen mit Hilfe eines effizienten Kühlsystems eliminiert werden.
6. Das Kühlsystem soll insbesondere derart gestaltet sein, dass für die inneren Elemente des Motors keine Leckage-Gefahr besteht.
7. Das Kühlsystem soll dazu geeignet sein, eine Wärmeübertragung von den inneren Elementen des Motors auf irgendwelche lager oder empfindliche Teile der anzutreibenden Walze oder des Zylinders zu vermeiden.
8. Der Rotor des Motors sollte derart gestaltet sein, dass eine Unwucht soweit wie möglich vermieden wird, d.h. die kritische Drehzahl sollte außerhalb eines breiten Dreh-zahlbereiches liegen, wie er insbesondere beim direkten Antrieb einer Walze oder eines Zylinders einer Papiermaschine vorkommt. Eine solche Maschine arbeitet im Bereich von Arbeitsgeschwindigkeiten zwischen ungefähr 20 m/min (der "Kriechgeschwindigkeit") und einer Höchstgeschwindigkeit von 2000 m/min oder darüber.
9. Bei einem Direktantrieb einer Papiermaschine (oder einer ähnlichen Einrichtung) soll der Außendurchmesser des Motors den Außendurchmesser der Walze nicht übersteigen; außerdem soll die Gesamtlänge ders Motors es erlauben, den Motor zwischen Walzenkörper und Walzenlager anzuordnen.

Der Hauptgedanke der vorliegenden Erfindung besteht darin, zumindest eine Vielzahl der obigen Probleme dadurch zu lösen, dass man ausgeht von einem Elektromotor mit den aus D4 bekannten Merkmalen des Oberbegriffs des Anspruches 1 und dass man bei einem solchen Elektromotor die Kombination der folgenden Merkmale anwendet:
A) Mindestens ein Wärmetauscher (zur Wärmeübertragung vom Kühlluftstrom an eine Kühlflüssigkeit) ist nun als ein Ring geformt und ist konzentrisch zur Motorachse angeordnet, und zwar im Bereich einer Stirnfläche des Rotors. Der Außendurchmesser dieses ringförmigen Wärmetauschers kann beinahe so groß sein wie der Außendurchmesser R des Rotors. Außerdem wird man den Innendurchmesser des ringförmigen Wärmetauschers so klein als möglich machen; zusammengenommen resultiert aus diesen Maßnahmen eine hohe Kühlkapazität des Wärmetauschers.
B) Der ringförmige Stator und/oder der ringförmige Rotor weisen mindestens eine ringförmige Reihe von Luftzirkulationskanälen auf, um Luftströme von der einen zur anderen Seite des Stators und/oder des Rotors zu führen. Daraus resultiert, dass im Betrieb der ganze Innenraum des Elektromotors mit einem toroidalen Luftstrom "ausgefüllt" ist. Dieser toroidale Luftstrom ist ähnlich dem toroidalen Flüssigkeitsstrom, der in einer hydrodynamischen Kupplung, einem Retarder oder einem Drehmomentwandler vorhanden ist. In jedem von verschiedenen Längsschnitten durch den Motor, z.B. in einem horizontalen oder vertikalen Längsschnitt wie auch in dazwischen gelegten
   Längsschnitten, ist der toroidale Luftstrom sichtbar in Form von zwei kreisförmigen Luftströmen. Im Gegensatz hierzu ist in D4 nur ein einziger kreisförmiger Luftstrom vorhanden, nämlich im Bereich des Wärmetauschers, der außerhalb eines Teiles der den Stator umhüllenden Gehäusesektion angeordnet ist. Deshalb offenbart D4 nicht einen toroidalen Luftstrom.

Zusammengefasst ist folgendes wesentlich für die Erfindung: Ein toroidaler Luftstrom, der sich vollkommen innerhalb des Motorgehäuses ausbildet, ist dazu geeignet, um eine sehr große Wärmemenge aufzunehmen, und zwar sehr gleichmäßig entlang dem ringförmigen Körper des Stators und/oder des Rotors. In Kombination mit der (oben beschriebenen) hohen Kühlleistung des wenigstens einen ringförmigen Wärmetauschers ist die Leistungsfähigkeit des kompletten Kühlsystems beträchtlich verbessert worden. Dies erlaubt es den Motor für den Direktantrieb einer Maschinenkomponente (z.B. Papiermaschinen-Walze) anzuwenden, und zwar gerade auch während einer langen Anlaufperiode bei geringer Geschwindigkeit, z.B. bei Kriechgeschwindigkeit.

Ein weiterer Vorteil ist, dass die Gesamtlänge L des Motorgehäuses relativ klein gemacht werden kann; d.h. das Verhältnis L/H zwischen der Länge L und dem Außendurchmesser H des Gehäuses kann kleiner sein als 1/2,0, vorzugsweise kleiner als 1/2,5. Dies ermöglicht es, den Motor (wenn er als sogenannter "Aufsteckmotor" ausgebildet ist) unmittelbar auf einem Walzenzapfen anzuordnen (oder auf einem Antriebszapfen irgend einer anderen Maschinenkomponente), vorzugsweise zwischen dieser Komponente (z.B. Walzenkörper) und einer (Walzen-) Lagerung, ähnlich der im Dokument D1 offenbarten Baugruppe.

Gegenüber dem Dokument D4 besteht der weitere Vorteil, dass der Kühlluftstrom nicht durch den Bereich außerhalb derjenigen Gehäusesektion strömt, welche den Stator umhüllt. Deshalb ist der Umfang des Motors im wesentlichen zylindrisch, wobei sein Außendurchmesser im allgemeinen kleiner ist als der Außendurchmesser einer Walze, so z.B. im Fall eines Direktantriebes einer Papiermaschinenwalze.

Der oben beschriebene erfindungsgemäße Elektromotor kann noch weiter verbessert werden durch Anwendung eines relativ großen Verhältnisses R/H zwischen dem Außendurchmesser R des Rotors und dem Außendurchmesser H des Gehäuses. Dieses Verhältnis R/H sollte zwischen 0,6/1 und 0,85/1 (... 0,9/1) betragen, vorzugsweise zwischen 0,7/1 und 0,75/1 (...0,8/1). Aus dieser Maßnahme ergeben sich zum einen relativ hohe Werte für Leistung und Drehmoment, selbst bei niedrigen Geschwindigkeiten, zum anderen steht mehr Platz zur Verfügung für den bzw. die ringförmigen Wärmetauscher, wobei der Außendurchmesser des Wärmetauschers relativ groß gewählt werden kann, um die Kühlleistung zu erhöhen.

Bei dem erfindungsgemäßen Motor kann der Rotor wenigstens eine Ring-Kammer umfassen. Die Ring-Kammer ist vorzugsweise innerhalb des Rotors angeordnet, sie ist jedoch zu dem Bereich hin offen, der sich nahe an der Stirnfläche des Rotors befindet. Weiterhin wird bevorzugt, dass der Rotor zwei Ring-Kammern umfasst, von denen jede im Bereich einer der zwei Stirnflächen angeordnet ist. Die zwei Ring-Kammern (angeordnet innerhalb des Rotors) sind durch eine Reihe von Öffnungen miteinander verbunden, die um die Rotorachse herum angeordnet sind. Dies ist eine bevorzugte Weise um die besagte Rotorbauart zu erzielen, bei der der Rotor mittels Verbindungselementen (z.B. Speichen, Stegen oder Schaufeln) mit der Motorwelle verbunden ist und bei der ein interner Kühlluftstrom durch die Öffnungen zwischen Rotor und Motorwelle strömt. Die Verbindungselemente können so gestaltet sein, dass sie den besagten inneren Kühlluftstrom induzieren. Darüberhinaus wird die Masse des Rotors reduziert.

Bei Bedarf kann der wenigstens eine ringförmige Wärmetauscher (der nahe bei einer der Stirnflächen des Rotors angeordnet ist) innerhalb einer der Ring-Kammern plaziert werden. Dies kann nützlich sein, um eine relativ kleine Gesamtlänge des Motors zu erzielen. Die vorliegende Erfindung ist anwendbar sowohl bei einem Motor mit Massiv-Rotor als auch bei einem Motor mit einem laminierten Rotor.

Zwar ist es möglich, die Erfindung in einer Bauart anzuwenden, bei welcher der Rotor unmittelbar mit dem inneren Umfang eines Walzenmantels verbunden ist (oder eines ähnlichen anzutreibenden Elements), wobei der Rotor den auf einer stationären Achse befestigten Stator umhüllt. Gemäß der vorliegenden Erfindung wird es jedoch bevorzugt, dass der Stator (der sich innerhalb eines stationären Gehäuses befindet) den Rotor umhüllt.

In vielen Fällen wird es vorteilhaft sein, den internen toroidalen Kühlluftstrom mittels zusätzlicher Gebläseschaufeln zu verstärken. Diese können an den genannten Verbindungselementen angeordnet sein. Jedoch wird man die zusätzlichen Gebläseschaufeln vorzugsweise an einer der Stirnflächen des Rotors anordnen.

Weitere Abwandlungen des erfindungsgemäßen Motors sind in Unteransprüchen beschrieben.

Zusammenfassend gilt, dass bei dem erfindungsgemäßen elektrischen Motor hohe Leitungs- und Drehmomentwerte erzielt werden in Kombination mit einer hohen Kühlkapazität. Deshalb ist der neuartige Motor besonders geeignet für einen Direktantrieb in einem Geschwindigkeitsbereich zwischen einer sehr niedrigen Geschwindigkeit (z.B. Kriechgeschwindigkeit) und normalen Geschwindigkeiten, die beispielsweise bei Walzen oder Zylindern von Papiermaschinen üblich sind. Es wird jedoch betont, dass dieser neuartige Motor auch für einen indirekten Antrieb benützt werden kann. Beispielsweise kann der Motor direkt auf dem Antriebszapfen eines Getriebes angeordnet werden.

Weitere wichtige Merkmale der vorliegenden Erfindung beziehen sich auf die Forderung, dass jegliche Leckage von Kühlflüssigkeit innerhalb des Motorgehäuses vermieden werden muss. Dieses Ziel wird erreicht durch ein Kühlsystem, das vom Innenraum des Motors hermetisch angetrennt ist. Zu diesem Zweck werden, in einer bevorzugten Ausführungsform der Erfindung, die Kühlflüssigkeitsleitungen einschließlich des ringförmigen Wärmetauschers ohne irgendwelche Nahtstellen, die sich möglicherweise öffnen könnten, hergestellt. Beispielsweise wird jede Kühlleitung (umfassend Einlass, Wärmetauscher und Auslass) als ein einstückiges Bauteil ausgebildet.

### Kurzbeschreibung der Zeichnungen

Die beigefügten Zeichnungen zeigen Ausführungsbeispiele der Erfindung:
- Figur 1: zeigt einen Teillängsschnitt eines elektrischen Motors.
- Figur 2: zeigt eine Abwandlung der Figur 1.
- Figur 3: zeigt eine verbesserte Version der Figur 1.
- Figur 4: zeigt einen Teilquerschnitt entlang der Linie A-A der Figur 3.
- Figur 5: zeigt einen Teilschnitt entlang der Linie B-B der Figur 3.
- Figur 6: zeigt eine Einzelheit eines modifizierten Rotors.
- Figur 7: zeigt weitere mögliche Verbesserungen gegenüber Figur 3.
- Figur 8: ist ein Längsschnitt durch einen weiterentwickelten Elektromotor.
- Figur 9: ist ein Teilquerschnitt entlang Linie C-D der Figur 8.
- Figur 10: zeigt schematisch das Flüssigkeitskühlsystem der Figur 8.
- Figur 11: zeigt eine mögliche Variante zu Figur 8.

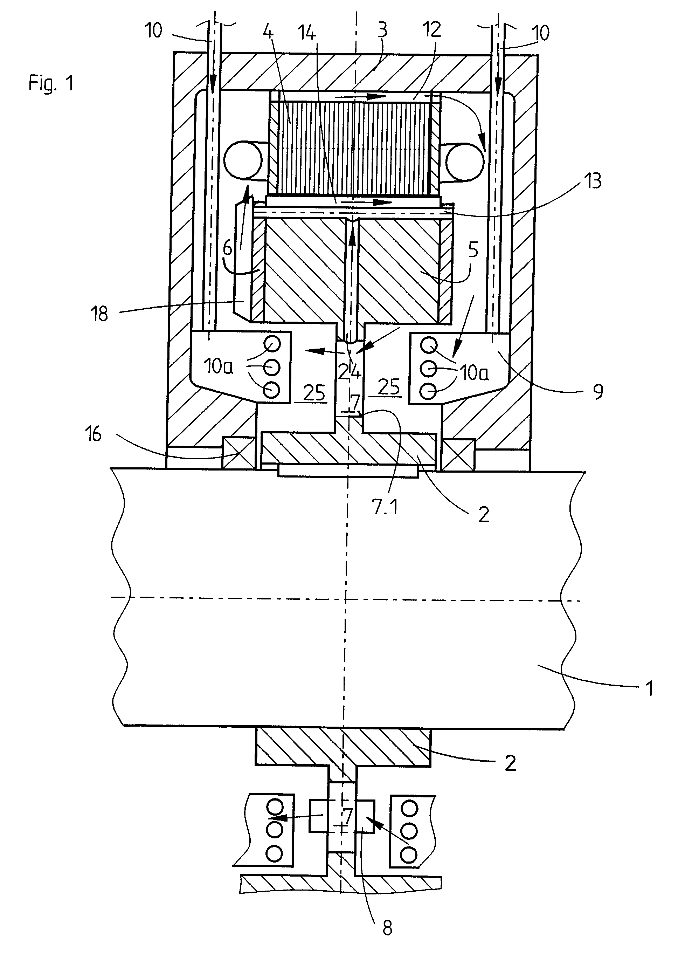

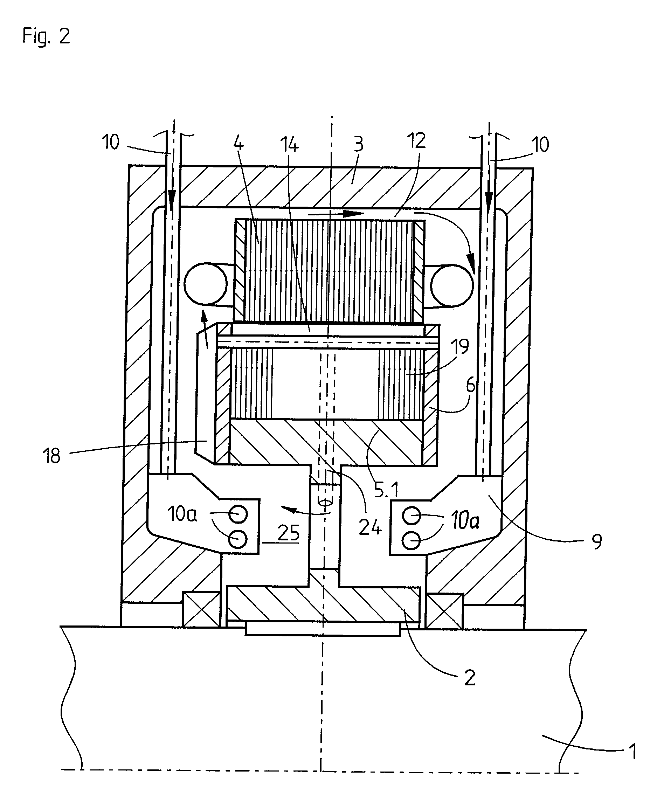

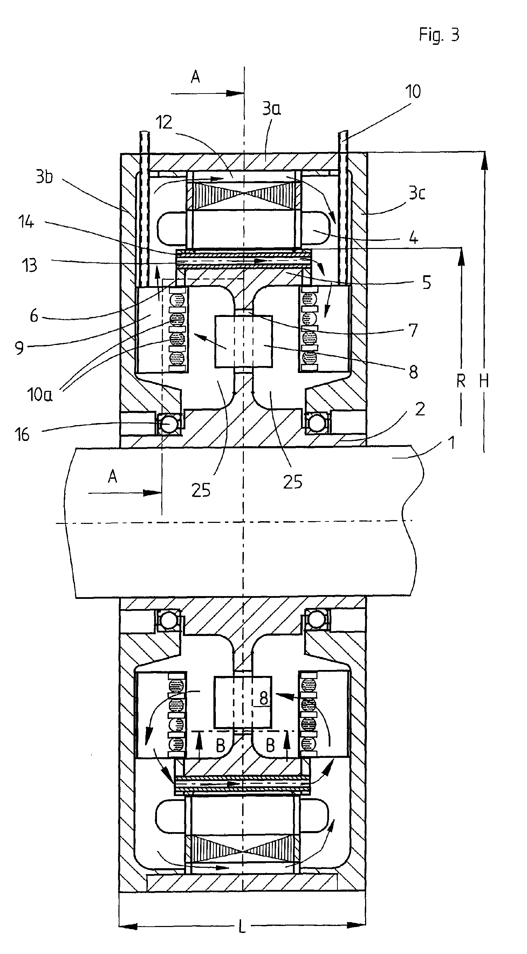

**Beschreibung der in den Zeichnungen dargestellten Ausführungsbeispiele** Während die Figuren 1 und 2 nur schematische Zeichnungen sind, um die grundsätzlichen Erfindungsgedanken darzustellen, zeigen die Figur 3 bis 5 eine realistischere Gestaltung einiger Ausführungsbeispiele der Erfindung.

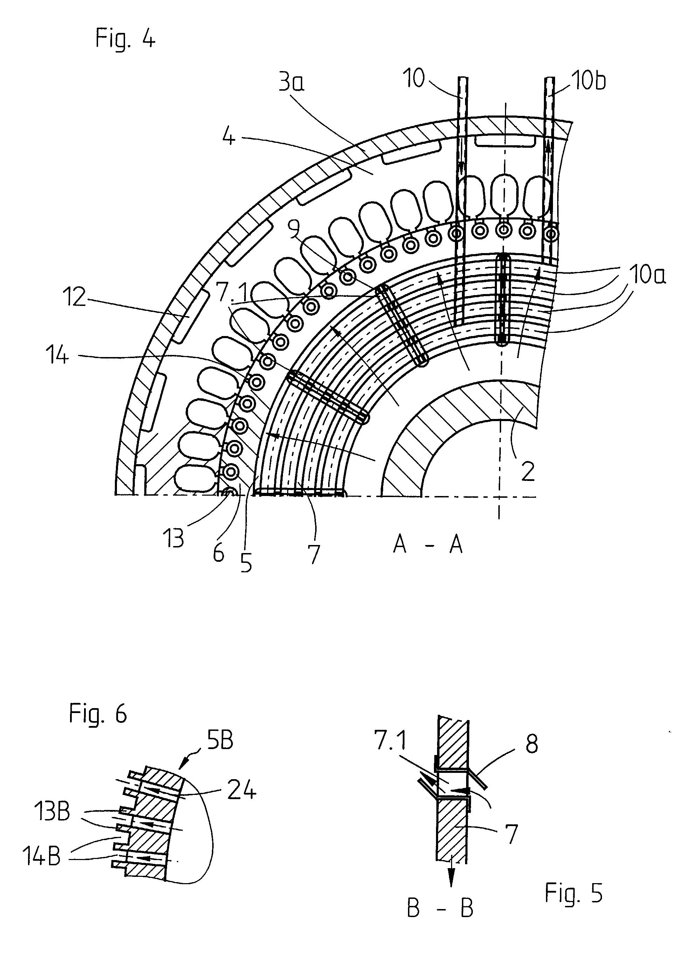

Der in Figur 1 dargestellte elektrische Aynchronmotor umfasst einen Rotor 5, der mittels radialer Arme 7 oder ähnlicher Elemente mit einer hohlen Motorwelle 2 verbunden ist. Die letztere ist unmittelbar mit einer anzutreibenden Welle 1 verbunden. Der Motor umfasst außerdem einen Stator 4, der den Rotor 5 umhüllt und der durch ein Gehäuse 3 abgestützt ist. Der Welle 1 (zusammen mit dem Rotor) ist mit Hilfe von Wälzlagern 16 innerhalb des Gehäuses 3 abgestützt. Rotor 5 und Stator 4 sind ringförmig. Zwischen den radialen Armen befinden sich Öffnungen 7.1 (siehe Figuren 4 und 5). Der Rotor 5 ist gemäß Fig. 1 ein sogenannter "Massiv-Rotor", weil bei ihm ein Eisenbleckpaket fehlt. An jeder Stirnfläche des Rotors 5 ist ein Kurzschlußring 6 vorgesehen. Außerdem sind hohle Kurzschlussstäbe 13 parallel zur Rotorachse angeordnet, und zwar nahe am Luftspalt zwischen dem Rotor und dem Stator.

An jeder Stirnfläche des Rotors 5 ist eine Ring-Kammer 25 vorgesehen, nämlich zwischen dem Rotor selbst und der Motorwelle 2. Jede Ring-Kammer 25 ist durch die radialen Arme 7 begrenzt und ist zur Seite des Rotors hin offen. Die zwei Ring-Kammern 25 sind über die besagten Öffnungen 7.1 miteinander verbunden.

Erfindungsgemäß ist innerhalb jeder Ring-Kammer 25 ein ringförmiger Wärmetauscher 10a angeordnet. Der Wärmetauscher 10a kann eine Reihe von kreisförmigen Kühlflüssigkeitsleitungen aufweisen. Bevorzugt wird jedoch (auf jeder Seite des Rotors) ein Wärmetauscher in Form einer spiralförmigen Kühlflüssigkeitsleitung 10a, die - zusammen mit ihrer

Zuführleitung 10 und mit ihrer Auslassleitung 10b (Figur 4) - als ein einstückiges Bauteil ausgebildet ist, so dass das komplette Flüssigkeitskühlsystem 10, 10a, 10b völlig frei ist von irgend einer Nahtstelle, die sich möglicherweise öffnen könnte. Die Kühlflüssigkeitsleitungen 10a sind an Armen 9 abgestützt, die innerhalb des Gehäuses 3 befestigt sind.

Beim Betrieb wird Wärme in sehr effektiver Weise vom Rotor 5 und vom Stator 4 an die Wärmetauscher 10a übertragen, weil die radialen Arme 7 einen inneren Luftstrom induzieren. Dieser ist gemäß der Erfindung ein toroidaler Luftstrom; er wird verstärkt durch Gebläse-schaufeln 8 (angeordnet an den radialen Armen 7) und/oder durch zusätzliche Gebläseschaufeln 18 (angeordnet an einer der Stirnflächen des Rotors 5, vorzugsweise an einem der Kurzschlussringe 6). Der toroidale Luftstrom strömt durch die Öffnungen 7.1 in Richtung zur linken Seite des Motors (im Falle der Figur 1), dann passiert er einen der Wärmetauscher 10a, danach die zusätzlichen Gebläseschaufeln 18, dann zum Teil die Kühlluftkanäle 14 (angeordnet am Umfang des Rotors 5 und vorzugsweise parallel zu seiner Achse) und teilweise die Kühlluftkanäle 12, die zwischen dem Gehäuse 3 und dem Stator 4 vorgesehen sind; hier strömt die Luft in Richtung nach rechts (im Falle der Figur 1). Nun verläuft der toroidale Luftstrom radial in Richtung zur Welle 1, nämlich durch den anderen Wärmetauscher 10a und zurück zu den Öffnungen 7.1. Falls erforderlich kann der Rotor 5 radiale Luftzuführkanäle 24 aufweisen, welche die Öffnungen 7.1 mit den hohlen Kurzschlussstäben 13 verbinden.

Die Figur 2 unterscheidet sich von Figur 1 darin, dass der Rotor 5.1 umgestaltet wurde zur Aufnahme eines Eisenblechpaketes 19.

Die Figuren 3 und 4 zeigen einige weitere Vorteile: Dank der Tatsache, dass die ringförmigen Wärmetauscher 10a innerhalb der Ringkammern 25 angeordnet sind, ist die Gesamtbaulänge L des Motorgehäuses 3a bis c sehr klein im Verhältnis zu dem Außendurchmesser H des Motorgehäuses. Das Verhältnis L/H zwischen der Länge L und dem Außendurchmesser H beträgt ungefähr 1/2,7. Außerdem gibt es hier ein sehr vorteilhaftes Verhältnis zwischen Rotor- und Gehäuse-Durchmesser R/H. Erfindungsgemäß kann dieses Verhältnis R/H vorzugsweise etwa 0,7/1... 0,8/1 betragen. Die Lager 16 sind nun (abweichend von den Figuren 1 und 2) zwischen der hohlen Motorwelle 2 und dem Gehäuse 3a bis c angeordnet. Dadurch ist der in Figur 3 gezeigte Motor ein sogenannter Aufsteckmotor,
der sich vollständig auf der anzutreibenden Welle 1 abstützt. Die Welle 1 kann beispielsweise ein Antriebszapfen einer Papiermaschinenwalze sein. Das Gehäuse (umfassend den Gehäusemantel 3a und zwei Gehäusedeckel 3b und 3c) müssen mit Hilfe einer nicht dargestellten Drehmomentstütze an irgend einem stationären Bauteil abgestützt sein.

In Figur 3 fehlen die radialen Luftzuführkanäle 24 der Figur 1. Ein Teil des toroidalen Luftstromes strömt nun durch die hohlen Kurzschlussstäbe 13 von der einen zur anderen Seite des Rotors 5. Man kann den toroidalen Luftstrom in Figur 3 (die ein vertikaler Längsschnitt sein kann) erkennen als zwei kreisförmige Luftströme, von denen sich der eine oberhalb und der andere unterhalb der Motorwelle 2 befindet. In gleicher Weise könnte man zwei kreisförmige Luftströme in einem horizontalen Längsschnitt durch den Motor sehen oder in irgend einem anderen Längsschnitt, der zwischen dem vertikalen und dem horizontalen Längsschnitt verläuft.

Die Figur 5 zeigt, wie eine Gebläseschaufel 8 (angeordnet in einer der Öffnungen 7.1) dazu beiträgt, den toroidalen Luftstrom zu induzieren.

Die Figur 6 zeigt den äußeren Bereich eines Massiv-Rotors 5b, der eine Vielzahl von Luftzirkulationskanälen aufweist in Form von Schlitzen 14B; diese erstrecken sich im wesentlichen parallel zur Rotorachse und begrenzen Kurzschlussstäbe 13B. Radiale Luftzufuhrkanäle 24 können vorgesehen sein oder weggelassen werden.

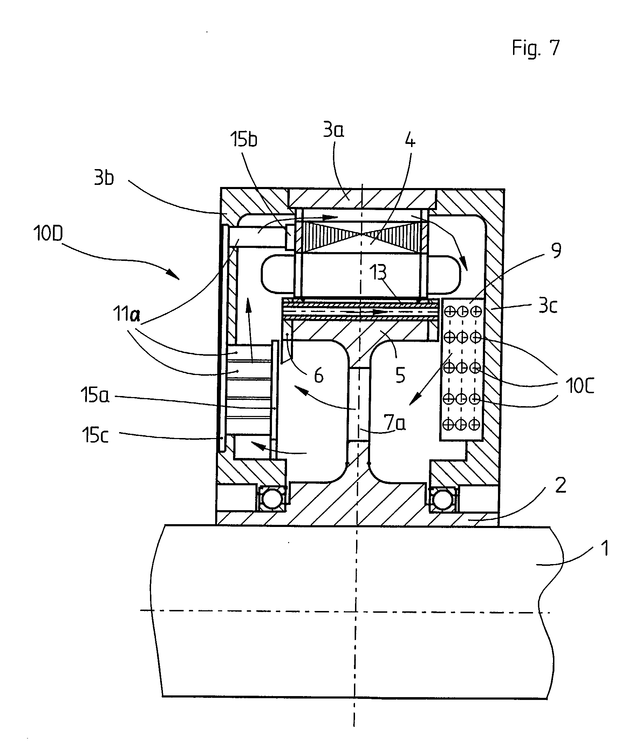

Das in Figur 7 dargestellte Ausführungsbeispiel unterscheidet sich von Figur 3 darin, dass ringförmige Wärmetauscher (in Form von Kühlflüssigkeitsleitungen 10C und D) unmittelbar an den Seiten des Rotors 5 angeordnet sind. Die Kühlflüssigkeitsleitungen 10C können als ein einstückiges Bauteil ausgebildet sein in Form einer sogenannten Dreifach-Spirale. Der Wärmetauscher 10D, der in den Gehäusedeckel 3b integriert ist, umfasst eine Vielzahl kurzer Flüssigkeitsröhrchen 11 a, die an ringförmige Verteiler 15a, 15b und an einen ringförmigen Sammler 15c angeschlossen sind. Der ringförmige Verteiler 15b kann unmittelbar den Stator 4 berühren. Wiederum wird ein interner toroidaler Luftstrom induziert, nämlich durch radiale Schaufeln 7a und/oder durch eine nicht dargestellte Zufuhr von komprimierter Luft.

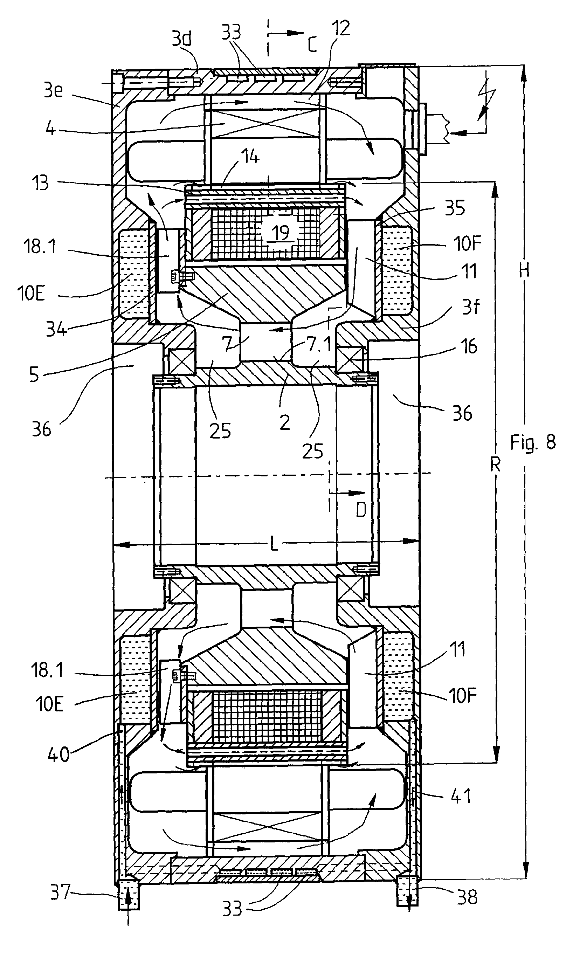

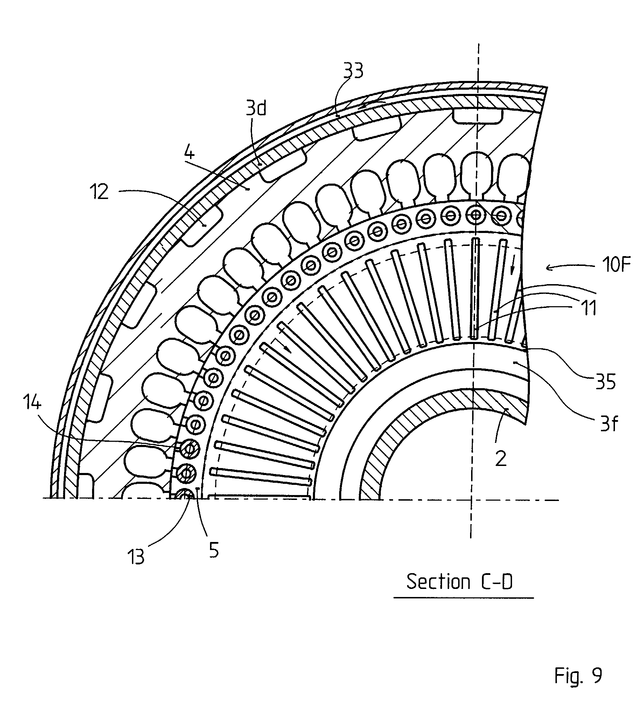

Nachfolgend werden anhand der Figuren 8 bis 11 einige weitere Verbesserungen des erfindungsgemäßen Elektromotors beschrieben. Wiederum umfasst das Motorgehäuse einen Gehäusemantel 3d und zwei Gehäusedeckel 3e und 3f. Gehäusemantel 3d (der den ringförmigen Stator 4 umhüllt) umfasst nun mehrere Kühlflüssigkeitsleitungen oder eine einzige schraubenförmige Kühlflüssigkeitsleitung 33, um die Kühlung des Stators 4 zu verbessern. Die Gehäusedeckel 3e und 3f sind als ringförmige Wärmetauscher ausgebildet, von denen jeder einen ringförmigen Flüssigkeitskanal 10E, 10F aufweist, abgedeckt durch eine ringförmige Scheibe 34, 35. Aus Figur 8 ist ersichtlich, dass der ringförmige Rotor - nahe am Flüssigkeitskanal 10E - eine Vielzahl von Gebläseschaufeln 18.1 aufweist, in Form eines Schaufelkranzes. Am anderen Gehäusedeckel 3f weist die ringförmige Scheibe 35 eine Vielzahl von Kühlrippen 11 auf, die sich mehr oder weniger in radialer Richtung erstrecken, wie aus Figur 9 ersichtlich ist. Die axiale Länge der Motorwelle 2A ist kürzer als in den Figuren 3 und 7, d.h. kürzer als die Länge L des Gehäuses 3e bis f. Deshalb liegen die Lager 16 näher an den Ringkammern 25. Hierdurch sind innerhalb der Länge L des Gehäuses 3e bis f Freiräume 36 entstanden. In einem dieser Freiräume 36 können (nicht dargestellte) Befestigungselemente angeordnet werden, mit denen die Motorwelle 2 an irgend einen Walzenzapfen oder an ein ähnliches anzutreibendes Element befestigt wird.

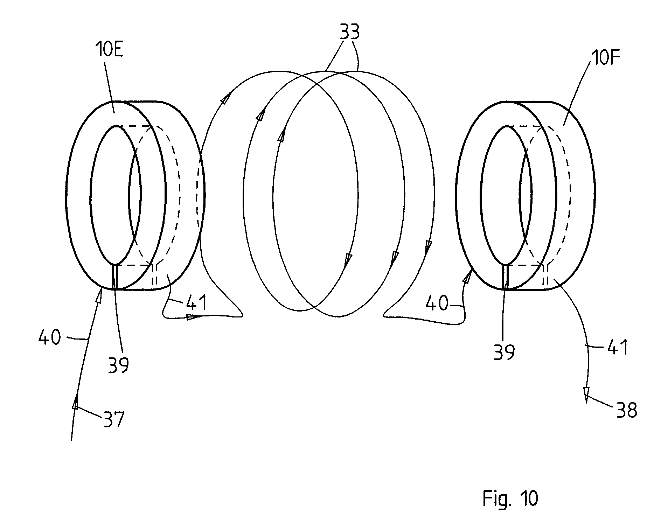

Die ringförmigen Kühlflüssigkeitskanäle 10E und 10F sowie die schraubenförmige Kühlflüssigkeitsleitung 33 können miteinander zu einem einzigen Kühlflüssigkeitssystem zusammengefasst werden, wie dies in Figur 10 dargestellt ist. Hierdurch weist das Gehäuse 3e bis f nur einen einzigen Kühlflüssigkeitseinlass 37 und einen einzigen Kühlflüssigkeitsauslass 38 auf. Jeder Flüssigkeitskanal 10E, 10F besitzt eine Trennwand 39, so dass die Flüssigkeit nur ein einziges Mal durch den ringförmigen Kanal strömt, wobei ein Flüssigkeitseinlass 40 und ein Flüssigkeitsauslass 41 beidseitig und nahe der Trennwand 39 angeordnet sind. Der Flüssigkeitsauslass 41 des Kanals 10E ist über die schraubenförmige Leitung 33 an den Flüssigkeitseinlass 40 des Kanals 10F angeschlossen. Im Ergebnis strömt die Kühlflüssigkeit zuerst durch den Kanal 10E, dann durch die Kühlleitung 33 und schließlich durch den Kanal 10F; dort übertragen die Kühlrippen 11 eine relativ hohe Wärmemenge von der Kühlluft zur Kühlflüssigkeit, nämlich unmittelbar bevor diese den Motor über den Auslass 38 verlässt.

Abweichend von Figur 8 könnte man den ringförmigen Flüssigkeitskanal (z.B. 10F) an der Außenseite des Gehäusedeckels 3f anordnen. Der Kanal würde in diesem Falle von der Außenseite her mittels einer ringförmigen Scheibe abgedeckt sein. Die Kühlrippen würden in diesem Falle direkt an der Innenseite des Gehäusedeckels angeformt sein.

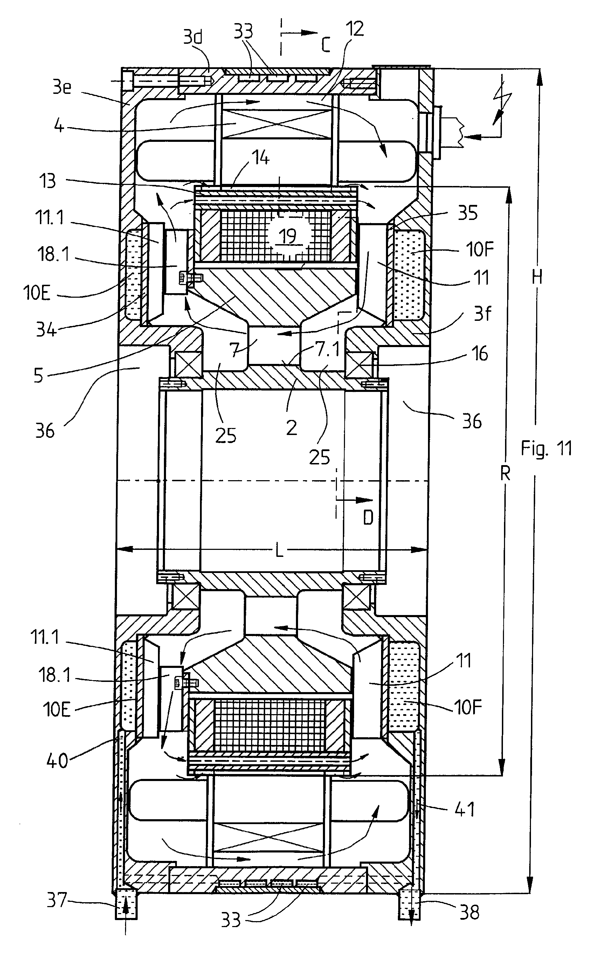

Eine weitere mögliche Variante zu Figur 8 ist in Figur 11 dargestellt. Hier ist auch die ringförmige Scheibe 34 der ringförmigen Flüssigkeitskammer 10E mit Kühlrippen 11.1 versehen (zusätzlichen zu den Kühlrippen 11 der anderen Seite). Falls gewünscht können solche zusätzliche Kühlrippen als Statorschaufeln ausgebildet sein, die mit den Gebläseschaufeln 18.1 zusammenwirken.

## Patentansprüche

1. Elektrischer Asynchronmotor zum Antrieb der Welle (1), eines Walzenmantels oder eines ähnlichen anzutreibenden Maschinenelements, mit den folgenden Merkmalen:
a) der Motor umfasst einen ringförmigen Rotor (5) und einen ringförmigen Stator (4), von denen jeder an jedem seiner beiden Enden eine Stirnfläche aufweist, wobei sich der Rotor innerhalb des Stators befindet und wobei beide in einem Gehäuse (3) angeordnet sind;
b) der Rotor (5) ist mit einer Motorwelle (2) verbunden mit Hilfe von Verbindungselementen (7), z.B. radialen Armen, Stegen, Schaufeln oder Speichen;
c) ein Motorkühlsystem umfasst einen internen Kühlluftkreislauf, wobei ein Luftstrom zwischen dem Rotor (5) und der Motorwelle (2) strömt sowie durch einen Wärmetauscher (10a), zwecks Wärmeübertragung vom Rotor (5) und/oder vom Stator (4) an eine Kühlflüssigkeit;
**gekennzeichnet durch** die folgenden Merkmale:
d) vorgesehen ist mindestens ein ringförmiger Wärmetauscher (10a) der innerhalb des Motorgehäuses (3) im Bereich einer Stirnfläche des Rotors (5) angeordnet ist;
e) vorgesehen ist mindestens eine ringförmige Reihe von Luftzirkulationskanälen (12, 14), die im ringförmigen Körper des Stators (4) und/oder des Rotors (5) angeordnet sind, um Luftströme von der einen zur anderen Stirnfläche des Stators und/oder des Rotors zu führen, so dass der genannte Kühlluftkreislauf einen internen toroidalen Luftstrom umfasst.

2. Elektrischer Motor nach Anspruch 1, **dadurch gekennzeichnet, dass** die Motorwelle (2) hohl ist, so dass der elektrische Motor als ein sogenannter Aufsteckmotor ausgebildet ist.

3. Elektrischer Motor nach Anspruch 1 oder 2, **dadurch gekennzeichnet, dass** er für einen Direktantrieb des besagten anzutreibenden Maschinenelements (1) benutzt wird.

4. Elektrischer Motor nach Anspruch 1, 2 oder 3, **dadurch gekennzeichnet, dass** der Rotor (5) eine Einrichtung (7, 8, 18) zum Induzieren des genannten inneren toroidalen Luftstromes aufweist, der innerhalb des Motorgehäuses (3) durch den Bereich zwischen Rotor (5) und Motorwelle (2) strömt, der weiterhin radial zum Bereich des Stators (4) strömt, danach durch die genannte Reihe von Kanälen (12, 14), danach radial zurück in den Bereich zwischen Rotor und Motorwelle, wobei der toroidale Luftstrom den genannten wenigstens einen ringförmigen Wärmetauscher (10A) passiert.

5. Elektrischer Motor nach einem der Ansprüche 1 bis 4, **dadurch gekennzeichnet, dass** das Verhältnis R/H zwischen dem Aussendurchmesser R des Rotors und dem Aussendurchmesser H des Gehäuses zwischen 0,6/1 und ungefähr 0,85/1 (....0,9/1) beträgt, vorzugsweise zwischen 0,7/1 und 0,75/1 (...0,8/1).

6. Elektrischer Motor nach einem der Ansprüche 1 bis 5, **dadurch gekennzeichnet, dass** das Verhältnis L/H zwischen der Länge L und dem Aussendurchmesser H des Gehäuses (3) zwischen 1/2,0 und 1/3,4 beträgt, vorzugsweise zwischen 1/2,4 und 1/3,0.

7. Elektrischer Motor nach Anspruch 4, **dadurch gekennzeichnet, dass** die Verbindungselemente (7) derart geformt sind, dass sie den genannten toroidalen Luftstrom induzieren.

8. Elektrischer Motor nach einem der Ansprüche 1 bis 7, **dadurch gekennzeichnet, dass** eine Druckluftzufuhr vorgesehen ist, um den genannten toroidalen Luftstrom zu induzieren oder zu verstärken.

9. Elektrischer Motor nach einem der vorangehenden Ansprüche, **dadurch gekennzeichnet, dass** der Rotor (5) wenigstens eine Ringkammer (25) begrenzt, vorzugsweise zwei Ringkammern (25), die an den Stirnflächen des Rotors angeordnet und miteinander durch Öffnungen (7.1) verbunden sind, die sich zwischen den genannten Verbindungselementen (7) erstrecken.

10. Elektrischer Motor nach Anspruch 1, **dadurch gekennzeichnet, dass** der Rotor (5) im wesentlichen als ein einstückiges Bauteil ausgebildet ist, d.h. der Motor umfasst einen "Massiv"-Rotor der frei ist von laminierten Elementen, z.B. Eisenblechen.

11. Elektrischer Motor nach Anspruch 1, **dadurch gekennzeichnet, dass** der Rotor eine Vielzahl laminierter Elemente aufweist, z.B. Eisenblechringe (19).

12. Elektrischer Motor nach irgend einem der vorangehenden Ansprüche, **dadurch gekennzeichnet, dass** der Rotor zusätzliche Gebläseschaufeln (8; 18) aufweist, um den genannten internen toroidalen Luftstrom zu verstärken.

13. Elektrischer Motor nach Anspruch 12, **dadurch gekennzeichnet, dass** die zusätzlichen Gebläseschaufeln (8) an den genannten Verbindungselementen (7) angeordnet sind.

14. Elektrischer Motor nach Anspruch 12, **dadurch gekennzeichnet, dass** die zusätzlichen Gebläseschaufeln (18) an einer der genannten Stirnseiten des Rotors angeordnet sind.

15. Elektrischer Motor nach Anspruch 14, **dadurch gekennzeichnet, dass** die zusätzlichen Gebläseschaufeln (18) an einem der Kurzschlussringe (6) des Rotors (5) angeordnet sind.

16. Elektrischer Motor nach Anspruch 12, 14 oder 15, **dadurch gekennzeichnet, dass** die zusätzlichen Gebläseschaufeln (18.1) an der einen Stirnfläche des Rotos (5) angeordnet sind, wobei der Wärmetauscher (10F) nahe der anderen Stirnfläche des Rotors angeordnet ist (Figur 8).

17. Elektrischer Motor nach einem der Ansprüche 1 bis 16, **dadurch gekennzeichnet, dass** das Gehäuse (3a bis c; 3d bis f) zwei ringförmige Wärmetauscher (10C, 10D; 10E, 10F) aufweist, wobei jeder Wärmetauscher im Bereich einer der zwei Stirnflächen des Rotors (5) angeordnet ist.

18. Elektrischer Motor nach Anspruch 17, **dadurch gekennzeichnet, dass** ein Wärmetauscher (10E) nahe bei den zusätzlichen Gebläseschaufeln (18.1) angeordnet ist.

19. Elektrischer Motor nach Anspruch 1, **dadurch gekennzeichnet, dass** Luftzirkulationskanäle (12) zwischen dem Stator (4) und dem Gehäuse (3) vorgesehen sind.

20. Elektrischer Motor nach Anspruch 1 oder 19, **dadurch gekennzeichnet, dass** zusätzliche Luftzirkulationskanäle (13) innerhalb des Rotors (5) vorgesehen und als hohle Kurzschlussstäbe ausgebildet sind.

21. Elektrischer Motor nach Anspruch 1 oder 19 oder 20, **dadurch gekennzeichnet, dass** Luftzirkulationskanäle (14) am Ringspalt zwischen Rotor (5) und Stator (4) vorgesehen sind.

22. Elektrischer Motor nach einem der vorangehenden Ansprüche, **dadurch gekennzeichnet, dass** am Außenumfang des Rotors (5), der mit dem Stator (4) einen Luftspalt bildet, eine Vielzahl von Schlitzen (14B) vorgesehen sind, die sich im wesentlichen parallel zur Rotorachse erstrecken und Kurzschlussstäbe (13B) begrenzen, wobei die letzteren auch als Kühlgebläseschaufeln wirken und einen zusätzlichen Luftstrom induzieren zum Abführen von Wärme aus dem Luftspalt zwischen Stator und Rotor (Figur 6).

23. Elektrischer Motor nach Anspruch 9, **dadurch gekennzeichnet, dass** der Rotor radiale Luftzuführkanäle (24) aufweist, welche die genannten Öffnungen (7.1) mit Luftzirkulationskanälen (14) oder mit hohlen Kurzschlussstäben (13) verbinden (Figur 1).

24. Elektrischer Motor nach einem der vorangehenden Ansprüche, **dadurch gekennzeichnet, dass** Kühlflüssigkeitsleitungen (10) und das Innere des genannten Wärmetauschers (10a) hermetisch vom Innenraum des Motors abgetrennt sind.

25. Elektrischer Motor nach Anspruch 24, **dadurch gekennzeichnet, dass** ein Flüssigkeitskühlsystem (10, 10a, 10b) wenigstens eine Kühlleitung aufweist, die als ein einstückiges Bauteil ausgebildet ist, umfassend einen Flüssigkeitseinlass (10), den genannten Wärmetauscher (10a) und einen Flüssigkeitsauslass (10b) (Figur 4).

26. Elektrischer Motor nach Anspruch 25, **dadurch gekennzeichnet, dass** der Wärmetauscher (10F) als ein ringförmiger Flüssigkeitskanal ausgebildet und in einem Gehäusedeckel (3f) des Motors angeordnet ist, wobei der Wärmetauscher Kühlrippen (11) aufweist, die sich von dem Ringkanal in das Innere des Motors erstrecken (Figuren 8, 9).

27. Elektrischer Motor nach Anspruch 26, **dadurch gekennzeichnet, dass** der ringförmige Flüssigkeitskanal (10F) einen Flüssigkeitszulauf (40) und einen Flüssigkeitsauslass (41) aufweist, außerdem eine Trennwand (39), die zwischen Einlauf und Auslauf angeordnet ist (Figur 10).

28. Elektrischer Motor nach Anspruch 15, **dadurch gekennzeichnet, dass** Kühlrippen (11.1) eines zusätzlichen Wärmetauschers (10E) nahe bei den zusätzlichen Gebläseschaufeln (18.1) angeordnet sind (Figur 11).

29. Elektrischer Motor nach Anspruch 28, **dadurch gekennzeichnet, dass** die Kühlrippen des zusätzlichen Wärmetauschers als Statorschaufeln ausgebildet sind, die mit den zusätzlichen Gebläseschaufeln zusammenwirken.

30. Elektrischer Motor nach einem der vorangehenden Ansprüche, **dadurch gekennzeichnet, dass** die Gehäusesektion (Gehäusemantel 3d), welche den Stator (4) umhüllt, eine Kühlflüssigkeitsleitung (33) aufweist (Figuren 8 bis 11).

31. Elektrischer Motor nach Anspruch 30, **dadurch gekennzeichnet, dass** Kühlflüssigkeit durch die genannte Kühlflüssigkeitsleitung (33) und danach durch den - Kühlrippen (11) aufweisenden - Wärmetauscher (10F) strömt.

32. Elektrischer Motor nach Anspruch 31, **dadurch gekennzeichnet, dass** Kühlflüssigkeit zuerst durch den Wärmetauscher (10E) strömt, der gegenüber dem anderen Wärmetauscher (10F) angeordnet ist.

33. Verfahren zum Kühlen eines elektrischen Asynchronmotors, der einen ringförmigen Stator (4) und einen ringförmigen Rotor (5) aufweist, der mit Hilfe von Verbindungselementen mit einer Motorwelle (2) verbunden ist, **dadurch gekennzeichnet, dass** innerhalb des Motorgehäuses (3) ein toroidaler Kühlluftstrom erzeugt wird, der durch einen Zwischenraum zwischen Rotor (5) und Motor-welle (2) hindurch strömt, ebenso durch eine ringförmige Reihe von Luftzirkulationskanälen (12, 14), die sich von der einen zur anderen Stirnfläche des Stators (4) und/oder des Rotors (5) erstrecken, wobei der toroidale Kühlluftstrom durch einen Wärmetauscher (10a) strömt, um Wärme an eine Kühlflüssigkeit zu übertragen, und schließlich zurück zu dem Zwischenraum zwischen Rotor (5) und Motorwelle (2).
